# EUROPEAN PATENT APPLICATION

(11) **EP 3 095 842 A1**
(43) Date of publication of application: **23.11.2016**
(21) Application number: 15168548.4
(22) Date of filing: 20.05.2015
(51) Int. Cl.: C10G 45/02

(54) **BIODEGRADABLE HYDROCARBON FLUIDS BASED ON SYNGAS**

(71) Applicant: TOTAL MARKETING SERVICES, 92800 Puteaux (FR)
(72) Inventor: GERMANAUD, Laurant, 38540 Heyrieux (FR); DOUCET, Clarisse, 92300 Levallois Perret (FR)
(74) Representative: August & Debouzy avocats

(57) **Abstract**

The invention provides for a fluid having a boiling point in the range of from 100 to 400°C and comprising more than 90% isoparaffins and containing less than 300ppm aromatics, obtainable by the process comprising the step of catalytically hydrogenating a feed comprising more than 95% by weight of a feedstock originating from syngas, at a temperature from 80 to 180°C and at a pressure from 50 to 160 bars.

The invention also provides for a fluid having a boiling point in the range of from 100 to 400°C and a boiling range below 80°C, said fluid comprising more than 90% isoparaffins and less than 3% of naphthens and having a ratio of iso-paraffins to n-paraffins of at least 12:1, a biodegradability at 28 days of at least 60%, a biocarbon content of at least 95%, and containing less than 100ppm aromatics.

The invention finally provides for uses of the fluid.

## Description

### FIELD OF THE INVENTION

The invention relates to the production of biodegradable hydrocarbon fluids, hereinafter referred to as being improved fluids, having a narrow boiling range and having a very low aromatic content and their uses. The invention relates to a process for producing these improved fluids by hydrogenation of a feedstock originating from a syngas, especially biosourced syngas.

### BACKGROUND ART

Hydrocarbon fluids find widespread use as solvents such as in adhesives, cleaning fluids, solvents for explosives, for decorative coatings and printing inks, light oils for use in applications such as metal extraction, metalworking or demoulding and industrial lubricants, and drilling fluids. The hydrocarbon fluids can also be used as extender oils in adhesives and sealant systems such as silicone sealants and as viscosity depressants in plasticised polyvinyl chloride formulations and as carrier in polymer formulation used as flocculants for example in water treatment, mining operations or paper manufacturing and also used as thickener for printing pastes, as plasticizers in tyre materials. Hydrocarbon fluids may also be used as solvents in a wide variety of other applications such as chemical reactions.

The chemical nature and composition of hydrocarbon fluids varies considerably according to the use to which the fluid is to be put. Important properties of hydrocarbon fluids are the distillation range generally determined by ASTM D-86 or the ASTM D-1160 vacuum distillation technique used for heavier materials, flash point, density, aniline point as determined by ASTM D-611, aromatic content, sulphur content, viscosity, colour and refractive index.

These fluids tend to have narrow boiling point ranges as indicated by a narrow range between Initial Boiling Point (IBP) and Final Boiling Point (FBP) according to ASTM D-86. The Initial Boiling Point and the Final Boiling Point will be chosen according to the use to which the fluid is to be put. However, the use of the narrow cuts provides the benefit of a narrow flash point which is important for safety reasons. The narrow cut also brings important fluid properties such as a better defined aniline point or solvency power, then viscosity, and defined evaporation conditions for systems where drying is important, and finally better defined surface tension.

Nowadays, biodegradability is a requirement for these specific fluids.

US2009/0014354 discloses biodegradable cuts boiling at 356-413°C, and comprising mostly isoparaffins with an amount of naphthenics of not less than 7%. The cuts originate from biological origin.

EP2368967 discloses a solvent composition containing 5 to 30% of C₁₀-C₂₀ n-alkanes, and 70 to 95 % of C₁₀-C₂₀ iso-alkanes, by weight, said solvent composition being produced from raw materials of biological origin. There is no indication of the boiling range.

WO00/20534 discloses a solvent issued from Fischer-Tropsch synthesis and which is typically a biodegradable synthetic middle distillate cut and has an isoparaffins to n-paraffins mass ratio of between about 1: 1 to about 12:1. The boiling range is above 80°C. A preferred composition is one which has at least 30% (mass) of the isoparaffins as mono-methyl branched.

WO2006/084285 discloses a hydrocarbon fluid composition of synthetic origin comprising isoparaffins and a minimum initial boiling point to maximum final boiling point at or within the range of 110°C to 350°C and which is said to be biodegradable. The cetane number is said to be less than 60. The applicant is also marketing a composition ISOPAR®, which typically contains more than 20% naphthenic compounds.

There is still a need for fluids with high biodegradability and being of biological origin.

### SUMMARY OF THE INVENTION

The invention provides new hydrocarbon fluids, and especially obtainable by the process of the invention, hereafter "improved fluids". The invention thus provides a fluid having a boiling point in the range of from 100 to 400°C and comprising more than 90% isoparaffins and containing less than 300ppm aromatics, obtainable by the process comprising the step of catalytically hydrogenating a feed comprising more than 95% by weight of a feedstock originating from syngas, at a temperature from 80 to 180°C and at a pressure from 50 to 160 bars.

According to an embodiment, the feed comprises more than 98%, preferably more than 99% of a feedstock originating from syngas.

According to an embodiment, the feedstock originates from renewable syngas.

According to an embodiment, a fractionating step is carried out before the hydrogenating step, or after the hydrogenating step or both; according to an embodiment, the process comprises three hydrogenation stages, preferably in three separate reactors.

The invention also provides new hydrocarbon fluids, hereafter "improved fluids", also referring to the fluids obtained by the process of the invention.

The invention thus provides fluids having a boiling point in the range of from 100 to 400°C and a boiling range below 80°C, said fluid comprising more than 90% isoparaffins and less than 3% of naphthens and having a ratio of iso-paraffins to n-paraffins of at least 12:1, a biodegradability at 28 days of at least 60%, a biocarbon content of at least 95%, and containing less than 100ppm aromatics.

According to an embodiment, the fluid has a boiling point in the range 150 to 400°C, preferably from 200 to 400°C, especially 220 to 340°C and advantageously more than 250°C and up to 340°C.

According to an embodiment, the fluid has a boiling range below 80 °C, preferably below 60°C, advantageously between 40 and 50°C.

According to an embodiment, the fluid contains less than 100ppm aromatics, and preferably less than 50ppm, more preferably less than 20ppm.

According to an embodiment, the fluid contains less than 3% by weight of naphthens, preferably less than 1% and advantageously less than 100ppm.

According to an embodiment, the fluid contains less than 5ppm, even less than 3ppm and preferably less than 0.5ppm sulphur

According to an embodiment, the fluid comprises more than 95% isoparaffins, preferably more than 98%.

According to an embodiment, the fluid has a ratio of iso-paraffins to n-paraffins of at least 12:1, preferably at least 15:1, more preferably at least 20:1.

According to an embodiment, the fluid has a biodegradability at 28 days of at least 60%, preferably at least 70%, more preferably at least 75% and advantageously at least 80%, as measured according to the OECD 306 standard.

According to an embodiment, the fluid has a biocarbon content of at least 95%, preferably at least 97%, more preferably at least 98%, and even more preferably about 100%.

Another object of the invention is the use of the improved fluids. The invention thus provides for the use of the fluids of the invention, as drilling fluids, in hydraulic fracturing, in mining, in water treatments, as industrial solvents, in paints composition, for decorative coatings, in coating fluids, in car industry, in textile industry, in metal extraction, in explosives, in oil dispersants, in concrete demoulding formulations, in adhesives, in printing inks, in metal working fluids, coating fluids, rolling oils especially for aluminum, as cutting fluids, as rolling oils, as electric discharge machining (EDM) fluids, rust preventive, industrial lubricants, as extender oils, in sealants such as mastics or polymers especially with silicone, as viscosity depressants in plasticised polyvinyl chloride formulations, in resins, in varnishes, as phytosanitary fluid especially as crop protection fluids, as adjuvant or excipient in vaccine preparations, in paint compositions, especially low-odor paints, in polymers used in water treatment, paper manufacturing or printing pastes especially as thickener, cleaning and/or degreasing solvents, for slurry polymerization, in food processing industry, for food grade application, home care, heat-transfer media, shock absorbers, insulation oils, hydraulic oils, gear oils, turbine oils, textile oils and in transmission fluids such as automatic transmission fluids or manual gear box formulations, and as solvents in chemical reactions including cristallization, extraction and fermentation.

### DESCRIPTION OF EMBODIMENTS OF THE INVENTION

The feedstock will first be disclosed, then the hydrogenation step and the associated fractionating step, and finally the improved fluids.

### Feedstock.

The feedstock or simply feed is a feed which is the result of a process of conversion of syngas into hydrocarbons suitable for further processing as a feedstock. Syngas typically comprises hydrogen and carbon monoxide and possibly minor other components. like carbon dioxide. A preferred syngas used in the invention is renewable syngas, i.e. syngas from renewable sources (incl. renewable energy sources)

Representative of possible syngas-based feedstocks are the Gas to liquids (GTL) feedstock, the Biomass to liquids (BTL) feedstock, the renewable Methanol to liquid (MTL) feedstock, renewable steam reforming, and waste-to-energy gasification, as well as more recent methods using renewable energy (solar energy, wind energy) to convert carbon dioxide and hydrogen into syngas. An example of this later process is the audi® e-diesel feedstock process. The term syngas also extends to any source of material that can be used in a Fischer Tropsch process, such as methane-rich gases (which may use syngas as intermediate).

The syngas to liquids (STL) process is a refinery process that converts a gaseous hydrocarbons into longer-chain hydrocarbons such as gasoline or diesel fuel. Renewable methane-rich gases are converted into liquid synthetic fuels either via direct conversion or via syngas as an intermediate, for example using the Fischer Tropsch process, Methanol to Gasoline process (MTG) or Syngas to gasoline plus process (STG+). For the Fischer Tropsch process, the effluents produced are Fischer-Tropsch derived.

By "Fischer-Tropsch derived" is meant that a hydrocarbon composition is, or derives from, a synthesis product of a Fischer-Tropsch condensation process. The Fischer-Tropsch reaction converts carbon monoxide and hydrogen (syngas) into longer chain, usually paraffinic hydrocarbons. The overall reaction equations is straightforward (but hide mechanistic complexity):

n(CO + 2H₂ ) = (-CH₂-)n + nH₂O + heat,

in the presence of an appropriate catalyst and typically at elevated temperatures (e.g., 125 to 300°C , preferably 175 to 250°C) and/or pressures (e.g., 5 to 100 bars, preferably 12 to 50 bars). Hydrogen: carbon monoxide ratios other than 2:1 may be employed if desired. The carbon monoxide and hydrogen may themselves be derived from organic or inorganic, natural or synthetic sources, typically either from natural gas or from organically derived methane. For examples it can also be derived from biomass or from coal.

The collected hydrocarbon composition containing a continuous iso-paraffinic series as described above may preferably be obtained by hydroisomerisation of a paraffinic wax, preferably followed by dewaxing, such as solvent or catalytic dewaxing. The paraffinic wax is preferably a Fischer-Tropsch derived wax.

Hydrocarbon cuts may be obtained directly from the Fischer-Tropsch reaction, or indirectly for instance by fractionation of Fischer-Tropsch synthesis products or preferably from hydrotreated Fischer-Tropsch synthesis products.

Hydrotreatment preferably involves hydrocracking to adjust the boiling range (see, e.g., GB-B-2077289 and EP-A-0147873) and/or hydroisomerisation, which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. It is possible to adjust the isomerization process so as to obtain mainly isoparaffins with the required carbon distribution. The syngas-based feedstock is isoparaffinic in nature as it contains more than 90% isoparaffins.

The desired fraction(s) may subsequently be isolated for instance by distillation.

Other post-synthesis treatments, such as polymerisation, alkylation, distillation, cracking-decarboxylation, isomerisation and hydroreforming, may be employed to modify the properties of Fischer-Tropsch condensation products, as described for instance in US-A-4125566 and US-A-4478955. Examples of Fischer-Tropsch processes which for example can be used to prepare the above-described Fischer-Tropsch derived collected hydrocarbon composition are the so-called commercial Slurry Phase Distillate technology of Sasol, the Shell Middle Distillate Synthesis Process and the "AGC-21" Exxon Mobil process. These and other processes are for example described in more details in EP-A-776959, EP-A-668342, US-A-4943672, US-A-5059299, WO-A-9934917 and WO-A-9920720.

Feedstocks typically contain less than 15 ppm of sulphur, preferably less than 8ppm and more preferably less than 5ppm, especially less than 1ppm, as measured according to EN ISO 20846. Typically the feedstocks will comprise no sulphur as being biosourced products.

Before entering the hydrogenation unit, a pre-fractionation step can take place. Having a more narrow boiling range entering the unit allows having a more narrow boiling range at the outlet. Indeed typical boiling ranges of pre-fractionated cuts are 220 to 330°C while cuts without a pre-fractionating step typically have a boiling range from 150°C to 360°C.

### Hydrogenation step.

The feedstock issued from syngas is then hydrogenated. The feedstock can optionally be pre-fractionated.

Hydrogen that is used in the hydrogenation unit is typically a high purity hydrogen, e.g. with a purity of more than 99%, albeit other grades can be used.

Hydrogenation takes place in one or more reactors. The reactor can comprise one or more catalytic beds. Catalytic beds are usually fixed beds.

Hydrogenation takes place using a catalyst. Typical hydrogenation catalysts include but are not limited to: nickel, platinum, palladium, rhenium, rhodium, nickel tungstate, nickel molybdenum, molybdenum, cobalt molybdenate, nickel molybdenate on silica and/or alumina carriers or zeolites. A preferred catalyst is Ni-based and is supported on an alumina carrier, having a specific surface area varying between 100 and 200 m²/g of catalyst.

The hydrogenation conditions are typically the following:
- Pressure: 50 to 160 bars, preferably 100 to 150 bars;
- Temperature: 80 to 180°C, preferably 120 to 160°C;
- Liquid hourly space velocity (LHSV) : 0,2 to 5 hr⁻¹, preferably 0.5 to 3;
- Hydrogen treat rate: adapted to the above conditions, which can be up to 200 Nm³/ton of feed.

The hydrogenation process of the invention can be carried out in several stages. There can be two or three stages, preferably three stages, preferably in three separate reactors. The first stage will operate the sulphur trapping, hydrogenation of substantially all unsaturated compounds, and up to about 90% of hydrogenation of aromatics. The flow exiting from the first reactor contains substantially no sulphur. In the second stage the hydrogenation of the aromatics continues, and up to 99% of aromatics are hydrogenated. The third stage is a finishing stage, allowing an aromatic content as low as 300ppm or even less such as below 100ppm or even below 50ppm, even for high boiling products.

The catalysts can be present in varying or substantially equal amounts in each reactor, e.g. for three reactors according to weight amounts of 0.05-0.5/0.10-0.70/0.25-0.85, preferably 0.07-0.25/0.15-0.35/0.4-0.78 and most preferably 0.10-0.20/0.20-0.32/0.48-0.70.

It is also possible to have one or two hydrogenation reactors instead of three.

It is also possible that the first reactor be made of twin reactors operated alternatively in a swing mode. This may be useful for catalyst charging and discharging: since the first reactor comprises the catalyst that is poisoned first (substantially all the sulphur is trapped in and/or on the catalyst) it should be changed often.

One reactor can be used, in which two, three or more catalytic beds are installed.

It may be necessary to insert quenches on the recycle to cool effluents between the reactors or catalytic beds to control reaction temperatures and consequently hydrothermal equilibrium of the hydrogenation reaction. In a preferred embodiment, there is no such intermediate cooling or quenching.

In case the process makes use of 2 or 3 reactors, the first reactor will act as a sulphur trap. This first reactor will thus trap substantially all the sulphur. The catalyst will thus be saturated very quickly and may be renewed from time to time. When regeneration or rejuvenation is not possible for such saturated catalyst the first reactor is considered as a sacrificial reactor which size and catalyst content both depend on the catalyst renewal frequency.

In an embodiment the resulting product and/or separated gas is/are at least partly recycled to the inlet of the hydrogenation stages. This dilution helps, if this were to be needed, maintaining the exothermicity of the reaction within controlled limits, especially at the first stage. Recycling also allows heat-exchange before the reaction and also a better control of the temperature.
The stream exiting the hydrogenation unit contains the hydrogenated product and hydrogen. Flash separators are used to separate effluents into gas, mainly remaining hydrogen, and liquids, mainly hydrogenated hydrocarbons. The process can be carried out using three flash separators, one of high pressure, one of medium pressure, and one of low pressure, very close to atmospheric pressure.

The hydrogen gas that is collected on top of the flash separators can be recycled to the inlet of the hydrogenation unit or at different levels in the hydrogenation units between the reactors.

Because the final separated product is at about atmospheric pressure, it is possible to feed directly the fractionation stage, which is preferably carried out under vacuum pressure that is at about between 10 to 50 mbars, preferably about 30 mbars.

The fractionation stage can be operated such that various hydrocarbon fluids can be withdrawn simultaneously from the fractionation column, and the boiling range of which can be predetermined.

Therefore, fractionation can take place before hydrogenation, after hydrogenation, or both.

The hydrogenation reactors, the separators and the fractionation unit can thus be connected directly, without having to use intermediate tanks. By adapting the feed, especially the initial and final boiling points of the feed, it is possible to produce directly, without intermediate storage tanks, the final products with the desired initial and final boiling points. Moreover, this integration of hydrogenation and fractionation allows an optimized thermal integration with reduced number of equipment and energy savings.

### Fluids of the invention.

The fluids of the invention, especially those produced according to the process of the invention, hereafter referred to simply as "the improved fluids" possess outstanding properties, in terms of aniline point or solvency power, molecular weight, vapour pressure, viscosity, defined evaporation conditions for systems where drying is important, and defined surface tension.

The improved fluids are primarily isoparaffinic and contain more than 90% isoparaffins, preferably more than 95% and especially more than 98%.

The improved fluids typically contain less than 3% by weight of naphthens, preferably less than 1% and advantageously less than 100ppm.

The improved fluids typically have a ratio of iso-paraffins to n-paraffins of at least preferably at least 12:1, more preferably at least 15:1, more preferably more than 20:1.

Typically, the improved fluids comprise carbon atoms number from 6 to 30, preferably 8 to 24 and most preferably from 9 to 20 carbon atoms.

The improved fluids have a boiling range from 100 to 400°C and also exhibit an enhanced safety, due to the very low aromatics content.

The improved fluids typically contain less than 300ppm, more preferably less than 100ppm, and even more preferably less than 50ppm, advantageously less than 20ppm aromatics (measured using a UV method). This makes them suitable for use in crop protection fluids. This is especially useful for high temperature boiling products, typically products boiling in the range 300-400°C, preferably 320-380°C.

The boiling range of the improved fluids is preferably not more than 80°C, preferably not more than 70°C, more preferably not more than 60°C, advantageously between 40 and 50°C.

The improved fluids also have an extremely low sulphur content, typically less than 5ppm, even less than 3ppm and preferably less than 0.5ppm, at a level too low to be detected by the usual low-sulphur analyzers.

The improved fluids find various uses, including but not limited to: as drilling fluids, in hydraulic fracturing, in mining, in water treatments, as industrial solvents, in paints composition, for decorative coatings, in coating fluids, in car industry, in textile industry, in metal extraction, in explosives, in oil dispersants, in concrete demoulding formulations, in adhesives, in printing inks, in metal working fluids, coating fluids, rolling oils especially for aluminium, as cutting fluids, as rolling oils, as electric discharge machining (EDM) fluids, rust preventive, industrial lubricants, as extender oils, in sealants such as mastics or polymers especially with silicone, as viscosity depressants in plasticised polyvinyl chloride formulations, in resins, in varnishes, as phytosanitary fluid especially as crop protection fluids, as adjuvant or excipient in vaccine preparations, in paint compositions, especially low-odor paints, in polymers used in water treatment, paper manufacturing or printing pastes especially as thickener, cleaning and/or degreasing solvents, for slurry polymerization, in food processing industry, for food grade application, home care, heat-transfer media, shock absorbers, insulation oils, hydraulic oils, gear oils, turbine oils, textile oils and in transmission fluids such as automatic transmission fluids or manual gear box formulations, and as solvents in chemical reactions including crystallization, extraction and fermentation.

In all this foreseen uses, the Initial Boiling Point (IBP) to Final Boiling Point (FBP) range is selected according to the particular use and composition. An Initial Boiling Point of more than 250°C allows classification as free of VOC (Volatile Organic Compound) according to the directive 2004/42/CE.

The isoparaffinic nature of the improved fluids allows for improved low temperature properties.

The improved fluids are also useful as components in adhesives, sealants or polymer systems such as silicone sealant, modified silane polymers where they act as extender oils and as viscosity depressants for polyvinyl chloride (PVC) pastes or Plastisol™ formulations.

The improved fluids may also be used as new and improved solvents, particularly as solvents for resins. The solvent-resin composition may comprise a resin component dissolved in the fluid, the fluid comprising 5 to 95% by total volume of the composition.

The improved fluids may be used in place of solvents currently used for inks, coatings and the like.

The improved fluids may also be used to dissolve resins such as: acrylic-thermoplastic, acrylic-thermosetting, chlorinated rubber, epoxy (either one or two part), hydrocarbon (e.g., olefins, terpene resins, rosin esters, petroleum resins, coumarone-indene, styrene-butadiene, styrene, methyl-styrene, vinyl-toluene, polychloroprene, polyamide, polyvinyl chloride and isobutylene), phenolic, polyester and alkyd, polyurethane and modified polyurethane, silicone and modified silicone (MS polymers), urea, and, vinyl polymers and polyvinyl acetate.

Examples of the type of specific applications for which the improved fluids and fluid-resin blends may be used include coatings, cleaning compositions and inks. For coatings the blend preferably has high resin content, i.e., a resin content of 20% to 80% by volume. For inks, the blend preferably contains a lower concentration of the resin, i.e., 5%-30% by volume.

In yet another embodiment, various pigments or additives may be added.

The improved fluids can be used as cleaning compositions for the removal of hydrocarbons

The improved fluids may also be used in cleaning compositions such as for use in removing ink, more specifically in removing ink from printing.

In the offset printing industry it is important that ink can be removed quickly and thoroughly from the printing surface without harming the metal or rubber components of the printing machine. Further there is a tendency to require that the cleaning compositions are environmentally friendly in that they contain no or hardly any aromatic volatile organic compounds and/or halogen containing compounds. A further trend is that the compositions fulfil strict safety regulations. In order to fulfil the safety regulations, it is preferred that the compositions have a flash point of more than 62°C, more preferably a flash point of 90°C or more. This makes them very safe for transportation, storage and use. The improved fluids have been found to give a good performance in that ink is readily removed while these requirements are met.

The improved fluids are also useful as drilling fluids, such as a drilling fluid which has the fluid prepared by the process of this invention as a continuous oil phase. The improved fluids may also be used as a penetration rate enhancer comprising a continuous aqueous phase containing the improved fluid dispersed therein.

Fluids used for offshore or on-shore applications need to exhibit acceptable biodegradability, human, eco-toxicity, eco-accumulation and lack of visual sheen credentials for them to be considered as candidate fluids for the manufacturer of drilling fluids. In addition, fluids used in drilling uses need to possess acceptable physical attributes. These generally include a viscosity of less than 4.0 mm²/s at 40°C, a flash value of usually more than 90°C and, for cold weather applications, a pour point at -40°C or lower. These properties have typically been only attainable through the use of expensive synthetic fluids such as hydrogenated polyalphaolefins, as well as unsaturated internal olefins and linear alphaolefins and esters. The properties can now be obtained in the improved fluids.

Drilling fluids may be classified as either water-based or oil-based, depending upon whether the continuous phase of the fluid is mainly oil or mainly water. Water-based fluids may however contain oil and oil-based fluids may contain water and the fluids produced according to the process of the invention are particularly useful as the oil phase.

Typically preferred ASTM D-86 boiling ranges for the uses of the fluids are that of printing ink solvents (sometimes known as distillates) have boiling ranges in the ranges of 235°C to 265°C, 260°C to 290°C, 280°C to 315°C and 300°C to 355°C. Fluids preferred for use as drilling fluids have boiling ranges in the ranges of 195°C to 240°C, 235°C to 265°C and 260°C to 290°C. Fluids preferred for explosives, concrete demoulding, industrial lubricants, transmission fluids and metal working fluids have boiling ranges in the ranges of 185°C to 215°C, 195°C to 240°C, 235°C to 365°C, 260°C to 290°C, 280°C to 325°C and 300°C to 360°C. Fluids preferred as extenders for sealants have boiling ranges in the ranges of 195°C to 240°C, 235°C to 265°C, 260°C to 290°C, 280°C to 325°C or 300°C to 360°C. Fluids preferred as viscosity depressants for polyvinyl chloride plastisols have boiling ranges in the ranges of 185°C to 215°C, 195°C to 240°C, 235°C to 265°C, 260°C to 290°C, 280°C to 315°C and 300°C to 360°C.

Fluids preferred as carrier for polymeric composition used in water treatment, mining operation or printing pastes have boiling ranges in the ranges of 185°C to 215°C, 195°C to 240°C, 235°C to 265°C, 260°C to 290°C, 280°C to 315°C and 300°C to 360°C.

Fluids preferred for crop protection application have boiling ranges in the range of 300 and 370°C, such fluids being used in combination with hydrocarbon fluids such as isodewaxed hydrocarbons or any hydrocarbons having comparable properties such as viscosity.

For paint compositions and cleaning applications, the most preferred boiling ranges are in the ranges of 140 to 210°C, and 180 to 220°C. Fluids showing an initial boiling point above 250°C and a final boiling point close to 330°C or preferably close to 290°C will be preferred for low VOC coatings formulations.

Biodegradation of an organic chemical refers to the reduction in complexity of the chemical through metabolic activity of microorganisms. Under aerobic conditions, microorganisms convert organic substances into carbon dioxide, water and biomass. OECD 306 method, is available for assessing biodegradability of individual substances in seawater. OECD Method 306 can be carried out as either a shake flask or Closed Bottle method and the only microorganisms added are those microorganisms in the test seawater to which the test substance is added. In order to assess the biotic degradation in seawater, a biodegradability test was performed which allows the biodegradability to be measured in seawater. The biodegradability was determined in the Closed Bottle test performed according to the OECD 306 Test Guidelines. The biodegradability of the improved fluids is measured according to the OECD Method 306.

The OECD Method 306 is the following:
The closed bottle method consists on dissolution of a pre-determined amount of the test substance in the test medium in a concentration of usually 2-10 mg/1, with one or more concentrations being optionally used. The solution is kept in a filled closed bottle in the dark in a constant temperature bath or enclosure controlled within a range of 15-20°C. The degradation is followed by oxygen analyses over a 28-day period. Twenty-four bottles are used (8 for test substance, 8 for reference compound and 8 for sweater plus nutriment). All analyses are performed on duplicate bottles. Four determinations of dissolved oxygen, at least, are performed (day 0, 5, 15 and 28) using a chemical or electrochemical method.

Results are thus expressed in % degradability at 28 days. The improved fluids have a biodegradability at 28 days of at least 60%, preferably at least 70%, more preferably at least 75% and advantageously at least 80%.

The invention uses the products of natural origin like starting products. The carbon of a biomaterial comes from the photosynthesis of the plants and thus of atmospheric CO₂. The degradation (by degradation, one will understand also combustion/incineration at the end of the lifetime) of these CO2 materials thus does not contribute to the warming since there is no increase in the carbon emitted in the atmosphere. The assessment CO₂ of the biomaterials is thus definitely better and contributes to reduce the print carbon of the products obtained (only energy for manufacture is to be taken into account). On the contrary, a fossil material of origin being also degraded out of CO₂ will contribute to the increase in the CO₂ rate and thus to climate warming. The improved fluids according to the invention will thus have a print carbon which will be better than that of compounds obtained starting from a fossil source.

The invention thus improves also the ecological assessment during the manufacture of the improved fluids. The term of "bio-carbon" indicates that carbon is of natural origin and comes from a biomaterial, as indicated hereafter. The content of biocarbon and the content of biomaterial are expressions indicating the same value.

A renewable material of origin or biomaterial is an organic material in which carbon comes from CO₂ fixed recently (on a human scale) by photosynthesis starting from the atmosphere. On ground, this CO₂ is collected or fixed by the plants. At sea, CO₂ is collected or fixed by microscopic bacteria or plants or algae carrying out a photosynthesis. A biomaterial (carbon natural origin 100%) presents an isotopic ratio ¹⁴C/¹²C higher than 10⁻¹², typically about 1.2 x 10⁻¹², while a fossil material has a null ratio. Indeed, the isotope ¹⁴C is formed in the atmosphere and is then integrated by photosynthesis, according to a scale of time of a few tens of years at the maximum. The half-life of ¹⁴C is 5730 years. Thus the materials resulting from photosynthesis, namely the plants in a general way, have necessarily a maximum content of isotope ¹⁴C.

The determination of the content of biomaterial or content of biocarbon is given pursuant to standards ASTM D 6866-12, method B (ASTM D 6866-06) and ASTM D 7026 (ASTM D 7026-04). Standard ASTM D 6866 concerns "Determining the Biobased Content of Natural Range Materials Using Radiocarbon and Isotope Ratio Mass Spectrometry Analysis", while standard ASTM D 7026 concerns "Sampling and Reporting of Results for Determination of Biobased Content of Materials via Carbon Isotope Analysis". The second standard mentions the first in its first paragraph.

The first standard describes a test of measurement of the ratio ¹⁴C/¹²C of a sample and compares it with the ratio ¹⁴C/¹²C of a sample renewable reference of origin 100%, to give a relative percentage of C of origin renewable in the sample. The standard is based on the same concepts that the dating with ¹⁴C, but without making application of the equations of dating. The ratio thus calculated is indicated as the "pMC" (percent Modem Carbon). If the material to be analyzed is a mixture of biomaterial and fossil material (without radioactive isotope), then the value of pMC obtained is directly correlated with the quantity of biomaterial present in the sample. The value of reference used for the dating to ¹⁴C is a value dating from the years 1950. This year was selected because of the existence of nuclear tests in the atmosphere which introduced great quantities of isotopes into the atmosphere after this date. The reference 1950 corresponds to a value pMC of 100. Taking into account the thermonuclear tests, the current value to be retained is approximately 107.5 (what corresponds to a factor of correction of 0.93). The signature into radioactive carbon of a current plant is thus of 107.5. A signature of 54 pMC and 99 pMC thus correspond to a quantity of biomaterial in the sample of 50% and 93%, respectively.

The compounds according to the invention come at least partly from biomaterial and thus present a content of biomaterial from at least 95%. This content is advantageously even higher, in particular more than 98%, more preferably more than 99% and advantageously about 100%. The compounds according to the invention can thus be bio-carbon of 100% biosourced or on the contrary to result from a mixture with a fossil origin. According to an embodiment, the isotopic ratio ¹⁴C/¹²C is between 1.15 and 1.2 x 10⁻¹².

All percentages and ppm are by weight unless indicated to the contrary. Singular and plural are used interchangeably to designate the fluid(s).

## Claims

1. Fluid having a boiling point in the range of from 100 to 400°C and comprising more than 90% isoparaffins and containing less than 300ppm aromatics, obtainable by the process comprising the step of catalytically hydrogenating a feed comprising more than 95% by weight of a feedstock originating from syngas, at a temperature from 80 to 180°C and at a pressure from 50 to 160 bars.

2. Fluid of claim 1, wherein the feed comprises more than 98%, preferably more than 99% of a feedstock originating from syngas.

3. Fluid of any one of claims 1 and 2, wherein the feedstock is originating from renewable syngas.

4. Fluid of any one of claims 1 to 3, wherein (i) a fractionating step is carried out before the hydrogenating step, or after the hydrogenating step or both, or (ii) the process comprises three hydrogenation stages, preferably in three separate reactors, or (iii) both (i) and (ii).

5. Fluid of any one of claims 1 to 4, having a boiling point in the range of from 100 to 400°C and a boiling range below 80°C, said fluid comprising more than 90% isoparaffins and less than 3% of naphthens and having a ratio of iso-paraffins to n-paraffins of at least 12:1, a biodegradability at 28 days of at least 60%, a biocarbon content of at least 95%, and containing less than 100ppm aromatics.

6. Fluid of any one of claims 1 to 5, having a boiling point in the range 150 to 400°C, preferably from 200 to 400°C, especially 220 to 340°C and advantageously more than 250°C and up to 340°C.

7. Fluid of any one of claims 1 to 6, having a boiling range below 80 °C, preferably below 60°C, advantageously between 40 and 50°C.

8. Fluid of any one of claims 1 to 7, containing less than 100ppm aromatics, and preferably less than 50ppm, more preferably less than 20ppm.

9. Fluid of any one of claims 1 to 8, containing less than 3% by weight of naphthens, preferably less than 1% and advantageously less than 100ppm.

10. Fluid of any one of claims 1 to 9, comprising more than 95% isoparaffins, preferably more than 98%.

11. Fluid of any one of claims 1 to 10, having a ratio of iso-paraffins to n-paraffins of at least 12:1, preferably at least 15:1, more preferably at least 20:1.

12. Fluid of any one of claims 1 to 11, having a biodegradability at 28 days of at least 60%, preferably at least 70%, more preferably at least 75% and advantageously at least 80%, as measured according to the OECD 306 standard.

13. Fluid of any one of claims 1 to 12, having a biocarbon content of at least 95%, preferably at least 97%, more preferably at least 98%, and even more preferably about 100%.

14. Use of the fluids according to any one of claims 1 to 13, as drilling fluids, in hydraulic fracturing, in mining, in water treatments, as industrial solvents, in paints composition, for decorative coatings, in coating fluids, in car industry, in textile industry, in metal extraction, in explosives, in oil dispersants, in concrete demoulding formulations, in adhesives, in printing inks, in metal working fluids, coating fluids, rolling oils especially for aluminum, as cutting fluids, as rolling oils, as electric discharge machining (EDM) fluids, rust preventive, industrial lubricants, as extender oils, in sealants such as mastics or polymers especially with silicone, as viscosity depressants in plasticised polyvinyl chloride formulations, in resins, in varnishes, as phytosanitary fluid especially as crop protection fluids, as adjuvant or excipient in vaccine preparations, in paint compositions, especially low-odor paints, in polymers used in water treatment, paper manufacturing or printing pastes especially as thickener, cleaning and/or degreasing solvents, for slurry polymerization, in food processing industry, for food grade application, home care, heat-transfer media, shock absorbers, insulation oils, hydraulic oils, gear oils, turbine oils, textile oils and in transmission fluids such as automatic transmission fluids or manual gear box formulations, and as solvents in chemical reactions including cristallization, extraction and fermentation.
